# EUROPEAN PATENT APPLICATION

(11) **EP 4 521 280 A1**
(43) Date of publication of application: **12.03.2025**
(21) Application number: 24198185.1
(22) Date of filing: 03.09.2024
(51) Int. Cl.: G06F 21/60, G06F 21/78, G06F 21/81

(54) **IMAGE FORMING APPARATUS AND METHOD OF OPERATING IMAGE FORMING APPARATUS**

(30) Priority: 08.09.2023 JP 2023146446
(71) Applicant: Sharp Kabushiki Kaisha, Sakai City, Osaka 590-8522 (JP)
(72) Inventor: OHKUBO, Hirotoshi, Sakai City, Osaka, 590-8522 (JP); MORI, Harunobu, Sakai City, Osaka, 590-8522 (JP)
(74) Representative: Müller Hoffmann & Partner

(57) **Abstract**

An image forming apparatus includes one or more controllers, one or more first memories, one or more second memories, a display, an operation acceptor, and an external interface. The one or more controller display, on the display, an inquiry screen for inquiring whether or not to encrypt the one or more second memories when an initial setting process is executed in a first state where use of the external interface is restricted, encrypt the one or more second memories, based on acceptance of an operation to encrypt the one or more second memories by the operation acceptor, and set a second state where a restriction on the use of the external interface is released, after the one or more second memories are encrypted.

## Description

### BACKGROUND OF THE INVENTION

### Field of the Invention

The present disclosure relates to an image forming apparatus and the like. This application is based on a Japanese Patent Application No. 2023-146446 application filed on September 8, 2023, the contents of which are incorporated herein by reference.

### Description of the Background Art

Installation with an initial setting, which is performed when an image forming apparatus is installed in a user's office or the like, is referred to as initial installation. In the initial setting, an administrator of the image forming apparatus, a password of a default user, and the like are set.

Further, there is a terminal that encrypts a setting value for security. For example, it is known in the prior art that a media access control (MAC) address is encrypted at a time of initial settings of a terminal.

However, the prior art does not describe restricting the use of the terminal before an encryption process is executed. Therefore, the user can freely use the terminal even before the encryption process is executed.

An object to be achieved by the present disclosure is to provide an image forming apparatus and the like capable of restricting an operation before the encryption process is executed.

### SUMMARY OF THE INVENTION

The present disclosure provides an image forming apparatus including a controller, a first storage, a second storage, a display, an operation acceptor, and an external interface, in which the controller displays, on the display, an inquiry screen for inquiring whether or not to encrypt the second storage when an initial setting process is executed in a first state where use of the external interface is restricted, encrypts the second storage, based on acceptance of an operation to encrypt the second storage by the operation acceptor, and sets a second state where a restriction on the use of the external interface is released, after the second storage is encrypted.

The present disclosure also provides a method of operating an image forming apparatus including an external interface, a first storage, and a second storage, the method including: displaying an inquiry screen for inquiring whether or not to encrypt the second storage when an initial setting process is executed in a first state where use of the external interface is restricted; encrypting the second storage, based on acceptance of an operation to encrypt the second storage; and setting a second state where a restriction on the use of the external interface is released, after the second storage is encrypted.

According to the present disclosure, it is possible to provide an image forming apparatus and the like in which an operation before execution of an encryption process is restricted.

### BRIEF DESCRIPTION OF THE DRAWINGS

FIG. 1 is a state transition diagram of a general image forming apparatus.
FIG. 2 is a functional block diagram of an image forming apparatus according to a first embodiment of the present disclosure.
FIG. 3 is a flowchart for describing an operation of the image forming apparatus according to the first embodiment of the present disclosure when an initial setting is performed.
FIG. 4 is a flowchart for describing an operation of the image forming apparatus according to the first embodiment of the present disclosure when an initial installation wizard is executed.
FIG. 5 is a flowchart for describing an operation of the image forming apparatus according to the first embodiment of the present disclosure when an encryption process is performed.
FIG. 6 is an example of a user consent screen for treatment of information, which is to be displayed on a display by the image forming apparatus according to the first embodiment of the present disclosure.
FIG. 7 is an example of a password setting screen (administrator) to be displayed on the display by the image forming apparatus according to the first embodiment of the present disclosure.
FIG. 8 is an example of a security setting screen to be displayed on the display by the image forming apparatus according to the first embodiment of the present disclosure.
FIG. 9 is a flowchart for describing an operation of an image forming apparatus according to a second embodiment of the present disclosure.
FIG. 10 is a flowchart for describing an operation of an image forming apparatus according to a third embodiment of the present disclosure.
FIG. 11 is a flowchart for describing an operation of an image forming apparatus according to a fourth embodiment of the present disclosure.
FIG. 12 is a flowchart for describing an operation of an image forming apparatus according to a fifth embodiment of the present disclosure.

### DESCRIPTION OF THE PREFERRED EMBODIMENTS

The image forming apparatus is, for example, a multi-function printer (MFP) or a multi-function peripheral. At present, a storage of an image forming apparatus having a standard configuration is not encrypted. When a user desires to encrypt the storage, the user needs to purchase a function of encrypting the storage as an option of the image forming apparatus. Therefore, it is possible to remove the storage from the image forming apparatus and read and write data from and to the storage in a state before the image forming apparatus reaches the user and the option is applied. In this respect, an image forming apparatus having a general configuration has a security risk. Note that a new European IoT standard requires safe storage of data even for the image forming apparatus having a standard configuration.

An image forming apparatus according to the present disclosure sets a first state where use of an external interface (I/F) is restricted until initial setting is performed by a user. The external interface refers to a means capable of outputting data to the outside of the image forming apparatus, and includes a communicator and a connector. More specifically, the external interface includes a network I/F, a universal serial bus (USB), a Bluetooth (registered trademark) communication device, a near field communication (NFC) communication device, and the like.

Further, the image forming apparatus according to the present disclosure restricts use of a main function of the image forming apparatus in addition to the external interface until the initial setting is performed by the user. The main function is a function other than the function related to the initial setting, and is specifically a copy function, a scanner function, a facsimile function, a printer function, or the like included in the image forming apparatus/multi-function peripheral.

The image forming apparatus according to the present disclosure executes the initial setting, and preferably executes encryption of the storage, and then sets a second state where restrictions on the external interface and the main function are partially or entirely released.

### 1. First Embodiment

### 1.1 State Transition Diagram

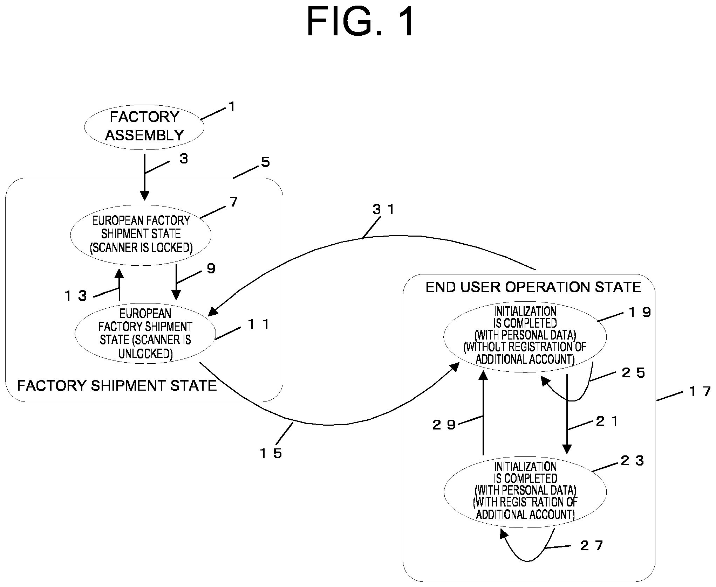

FIG. 1 is a general state transition diagram of an image forming apparatus. FIG. 1 illustrates transitions between three states, which are a state immediately after the image forming apparatus is assembled in a factory, a factory shipment state, and a state where the image forming apparatus is operated by an end user.

Immediately after the assembly in a factory is finished (state 1), when a shipment setting 3 for shipment from the factory is performed, the state shifts to a factory shipment state 5. Immediately after the shift to the factory shipment state 5, a scanner unit is locked in order to prevent breakage of the scanner unit during transportation (state 7). The scanner unit is associated with an image inputter 45 to be described below. In the state of the state 7, the scanner unit is transported to an installation location, the scanner unit is unlocked (9), the state shifts to a state 11, and then, the scanner unit is shipped to the end user. Note that it is possible to return to the state 7 by locking the scanner unit again (13) from the state 11.

After the image forming apparatus is brought into the state 11, the image forming apparatus is delivered to a user, and an initial setting 15 is performed by the user. More specifically, at the time of the initial setting 15, an initial installation wizard to be described below is executed in the image forming apparatus, and further, an encryption process is executed as necessary. The image forming apparatus in which the initial setting 15 is executed shifts to a state 19. The state 19 is a state where personal data of an administrator are registered by the initial installation wizard and an additional account is not registered. According to a procedure of custom user registration 21, the additional account is registered in response to a registration operation by an administrator or the like, and the image forming apparatus shifts to a state 23. There may be a procedure 25 for returning to an unregistered state from a state where a part of the additional account to be desirably registered is registered.

The state 23 is a state where the personal data of the administrator are registered by the initial installation wizard and a state where an additional account is registered. In the state 23, other settings related to the image forming apparatus, for example, various settings related to the main function may be registered. These other settings can be initialized in the state 23 while maintaining the personal data of the administrator and the additional account registration. An arrow 27 indicates this procedure. The procedure of all custom user deletion 29 by the user is a procedure of initializing both of these other settings and additional account registration.

A procedure 31 is a procedure of returning the image forming apparatus in the states 19 and 23 to the state 11 which is the factory shipment state. This procedure is executed, for example, when a user who has purchased the image forming apparatus discards the image forming apparatus or transfers the image forming apparatus to a third party.

### 1.2 Image Forming Apparatus 40

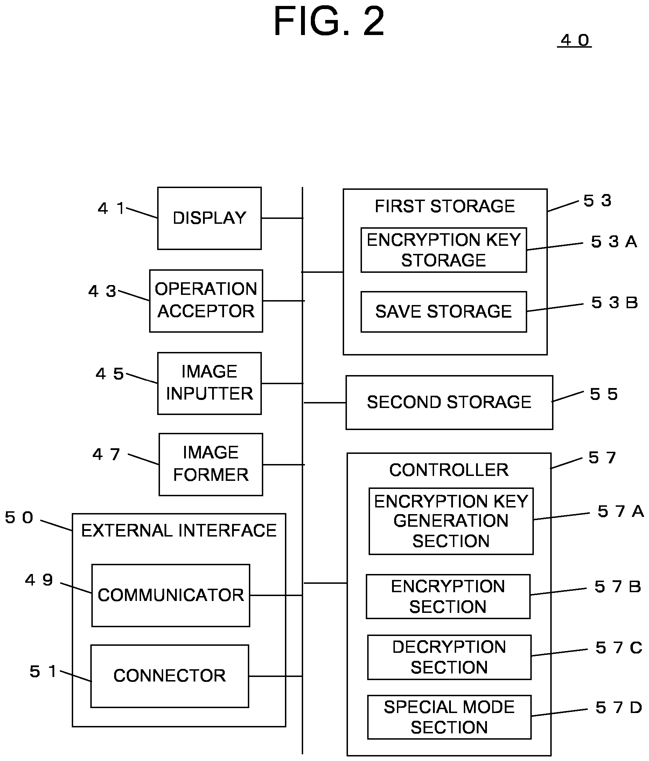

FIG. 2 is a functional block diagram of an image forming apparatus 40. The image forming apparatus 40 includes a display 41, an operation acceptor 43, an image inputter 45, an image former 47, a communicator 49, a connector 51, a first storage 53, a second storage 55, and a controller 57.

In the following description with reference to FIG. 2, the image forming apparatus 40 is in a state immediately after factory shipment, which corresponds to the state 11 in FIG. 1. Further, in addition to the state 11, the image forming apparatus 40 is delivered to the user in a state where a restriction on use of the external interface and a restriction on the main function are imposed. The restriction on the use of the external interface may be such that the use of the external interface is totally prohibited, or may be such that the use of the external interface is permitted only to a specific communication partner/connection partner and is prohibited to other communication partners/connection partners. The restriction on the use of the main function may be such that the use of the main function is totally prohibited, or may be such that the use of a part of the main function is prohibited and the use of other functions is permitted.

The display 41 displays an image and characters. The display 41 is constituted of, for example, a liquid crystal display (LCD), an organic electro-luminescence (EL) panel, or the like. The display 41 may be a single display device or may further include an externally connected display device.

The operation acceptor 43 accepts an operation input from a user. The operation acceptor 43 is constituted of a hardware key and a software key, for example. The operation acceptor 43 includes a task key for performing a task, such as FAX transmission or image reading, and a stop key for stopping an operation. The operation acceptor 43 may include physical operation keys, such as a task key, a stop key, a power key, or a power saving key. The display 41 and the operation acceptor 43 may be integrally configured as a touch panel display.

The image inputter 45 reads an image (document) and outputs the image as image data. The image inputter 45 is constituted of a general scanner unit (image input device). The image inputter 45 may input image data from an external storage medium such as a USB memory or may receive an image via a network.

The image former 47 forms (prints) an image on a medium such as a copy sheet, based on the image data. A printing method of the image former 47 is optional, and may be, for example, any one of an inkjet printer, a laser printer, a thermal transfer printer, and the like. The image former 47 may be a monochrome printer or a color printer. The image former 47 may include a paper feed mechanism that supplies a medium, a transport mechanism that transports a medium, a sorter mechanism that sorts a medium after an image is formed, and the like.

An external interface 50 is an interface for connecting to an other device, and includes the communicator 49 and the connector 51 in FIG. 2. The communicator 49 is one of external interfaces to be connected to a network. For example, the communicator 49 is constituted of an interface that is connectable to a wired local area network (LAN), a wireless LAN, or a long term evolution (LTE) network. By connecting the communicator 49 to a network, the communicator 49 is connected to an other device or an external network. In addition, the communicator 49 may be an interface that performs short-range wireless communication such as near field communication (NFC) or Bluetooth (registered trademark).

The connector 51 is one of the external interfaces that connects the image forming apparatus 40 to an other device. For example, the connector 51 is a USB interface, to which a USB memory or the like is connected. In addition, the connector 51 may be an interface such as HDMI (registered trademark) other than the USB interface.

In the present disclosure, the communicator 49 and the connector 51 may be collectively referred to as the external interface 50. As described above, the image forming apparatus 40 is in a state immediately after factory shipment, and the use of the external interface 50 is restricted.

The first storage 53 and the second storage 55 store various programs and various pieces of data necessary for the operation of the image forming apparatus. The first storage 53 and the second storage 55 include a recording device capable of transitory storage, such as a dynamic random access memory (DRAM), or a non-transitory recording device, such as a solid state drive (SSD) including a semiconductor memory or a hard disk drive (HDD) including a magnetic disk. For convenience of description, the first storage 53 and the second storage 55 are assumed as a single component, while the storage may be configured as separate devices for purposes, such as an area used for execution of a program (primary storage area), an area for storing a program and data (auxiliary storage area), and an area used for caching. The first storage 53 and the second storage 55 may be two storage areas in one storage device or may be two separate storage devices. Further, the image forming apparatus 40 may include three or more storage devices.

The first storage 53 includes an encryption key storage 53A and a save storage 53B. The encryption key storage 53A stores an encryption key generated by an encryption key generation section 57A to be described below. When an encryption method is a common key encryption method, one key common to encryption and decryption is stored. When the encryption method is a public key method, both a key for encryption and a key for decryption are stored. The save storage 53B temporarily stores data stored in the second storage 55 when the second storage 55 is encrypted. The first storage 53 is not a target of encryption by an encryption section 57B to be described below.

The second storage 55 is a target of encryption by the encryption section 57B to be described below, when the user selects execution of an encryption process to be described below. In the present embodiment, it is assumed that the image forming apparatus 40 is in a state immediately after factory shipment and the second storage 55 is not encrypted.

The controller 57 controls the entire image forming apparatus 40. The controller 57 is constituted of one or more control devices or control circuits, and, for example, is constituted of a central processing unit (CPU), a system on a chip (SoC), or the like. In addition, the controller 57 can achieve each function by reading a program stored in the storage and executing a process thereof. In particular, the controller 57 includes the encryption key generation section 57A, the encryption section 57B, a decryption section 57C, and a special mode section 57D.

The encryption key generation section 57A generates an encryption key for executing an encryption process. The encryption method is not particularly limited. The encryption method may be a common key encryption method or a public key encryption method. The encryption section 57B encrypts the second storage 55 by using the encryption key generated by the encryption key generation section 57A. When data are read out from the second storage 55 after the second storage is encrypted, the decryption section 57C decrypts the data by using the encryption key stored in the encryption key storage 53A. The special mode section 57D controls the image forming apparatus 40 in accordance with an operation mode assumed to be used when a service person or the like performs maintenance on the image forming apparatus 40.

### 1.3 Initial Setting

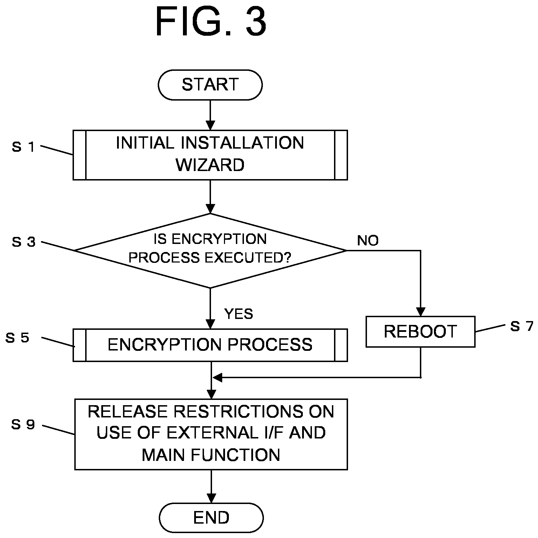

FIG. 3 is a flowchart for describing an operation of the image forming apparatus 40 when the initial setting is performed. This will be described below with reference to FIG. 3.

The controller 57 executes an initial installation wizard (step S1). Various setting values of the image forming apparatus 40 are determined by the initial installation wizard. The initial installation wizard will be described in detail below.

Next, the controller 57 displays, on the display 41, an inquiry screen for inquiring of the user as to whether or not to execute an encryption process and determines whether or not an input indicating that the encryption process is to be performed has been made (step S3). The encryption process will be described in detail below.

When an input indicating that encryption process is to be performed has been made on the inquiry screen from the operation acceptor 43 (YES in step S3), the controller 57 executes the encryption process and encrypts the second storage 55 (step S5), and the process proceeds to step S9. On the other hand, when the input indicating that the encryption process is not to be performed has been made on the inquiry screen from the operation acceptor 43 (NO in step S3), the controller 57 reboots the image forming apparatus 40 (step S7), and the process proceeds to step S9. After the reboot, various settings designated in the initial installation wizard are reflected in the operation of the image forming apparatus 40. In step S9, the controller 57 releases the use restrictions imposed on the external interface 50 and the main function.

### 1.3.1 Initial Installation Wizard

The initial installation wizard will be described. The controller 57 does not execute the initial installation wizard in a production process of the image forming apparatus 40. At the end of the production process, when the image forming apparatus 40 is activated next time, the controller 57 is set to execute the initial installation wizard. That is, basically, when the image forming apparatus 40 is activated for the first time by the user, the controller 57 executes the initial installation wizard.

The initial installation wizard is a process for setting at least some of various setting values related to the main function and other functions of the image forming apparatus 40. By executing the initial installation wizard, the initial setting for the image forming apparatus 40 is completed.

When the initial installation wizard is executed, the controller 57 displays items that need to be designated (input, selected, consented) by the user on the display 41 in a wizard format. The initial installation wizard prepares a plurality of operation screens, which are classified according to the type of setting items, presents the operation screens one by one to the user, and transitions to an operation screen of the next type in response to a confirmation operation by the user. When the designation by the user is completed for all the types, the initial installation wizard ends.

When the initial installation wizard ends, the setting values designated by the user are reflected as the setting values of the image forming apparatus 40. At this time, the image forming apparatus 40 is rebooted. The reboot may be omitted when unnecessary. Further, the reboot may be forcibly performed.

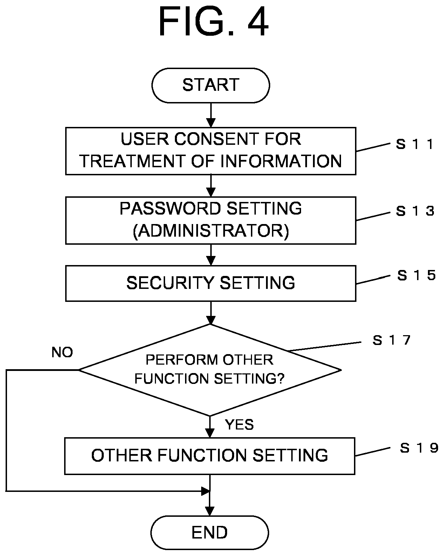

FIG. 4 is a flowchart for describing an operation of the image forming apparatus 40 when the initial installation wizard is executed. This will be described below with reference to FIG. 4.

The controller 57 displays a user consent screen for treatment of information on the display 41, and accepts a user consent setting for treatment of information via the operation acceptor 43 (step S11). Next, the controller 57 displays a password setting (administrator) screen on the display 41, and accepts password setting (administrator) via the operation acceptor 43 (step S13). Next, the controller 57 displays a security setting screen on the display 41, and accepts a security setting via the operation acceptor 43 (step S15). Next, the controller 57 displays, on the display 41, a screen for inquiring whether or not an other function setting is performed, and determines whether or not an input indicating that the other function setting is to be performed has been made (step S17).

When the input indicating that the other function setting is to be performed has been made via the operation acceptor 43 (YES in step S17), the controller 57 displays an other function setting screen on the display 41, and accepts the other function setting via the operation acceptor 43 (step S19). For example, settings related to a copy function, a scanner function, a facsimile function, a printer function, and the like of the image forming apparatus 40 are performed, and the initial installation wizard is ended. On the other hand, when the input indicating that the other function setting is not to be performed has been made via the operation acceptor 43 (No in step S17), the controller 57 ends the initial installation wizard without performing other function settings.

Note that setting contents of the initial installation wizard in FIG. 4 are merely examples, and settings, which are not described herein, may also be set in the initial installation wizard. For example, firmware update settings and the like may also be set as part of the initial installation wizard. At this time, such an additional setting item may be set as an essential setting item such as an administrator password (step S13) or a security setting (step S15), or may be set as a setting item for which the necessity of setting can be selected like the other function setting (step S19).

### 1.3.2 Encryption Process

As illustrated in steps S3 and S5 in FIG. 1, when the second storage 55 is encrypted after the end of the initial installation wizard, the controller 57 executes an encryption process. When the encryption process is executed, the controller 57 saves data and generates a key before the reboot, performs an automatic reboot after the completion, encrypts the second storage 55, and restores the data temporarily saved in the save storage 53B into the encrypted second storage 55. This will be described in detail below.

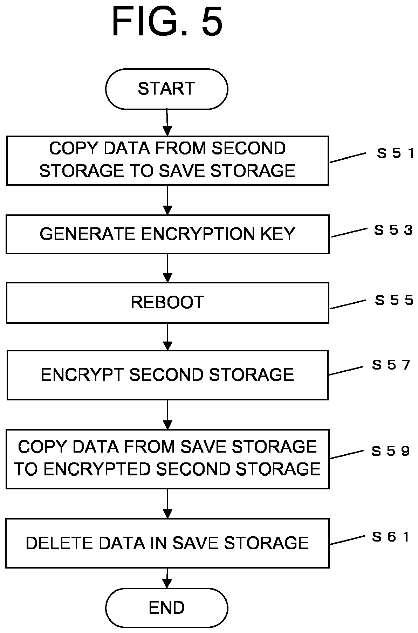

FIG. 5 is a flowchart for describing an operation of the image forming apparatus 40 when an encryption process is performed. The controller 57 copies data from the second storage 55 to the save storage 53B (step S51). At this time, the second storage 55 is not encrypted. Next, the encryption key generation section 57A of the controller 57 generates an encryption key and stores the generated encryption key in the encryption key storage 53A (step S53). Next, the controller 57 reboots the image forming apparatus 40 (step S55). Next, the encryption section 57B of the controller 57 encrypts the second storage 55 by using the encryption key stored in the encryption key storage 53A (step S57). Next, the controller 57 copies the data copied to the save storage 53B in step S51 to the second storage 55 (step S59). Since the second storage 55 has already been encrypted, the data are encrypted by the encryption section 57B and stored in the second storage 55. Next, the controller 57 deletes the data copied to the save storage 53B in step S51 from the save storage 53B (step S61).

### 1.3.3 Screen Example

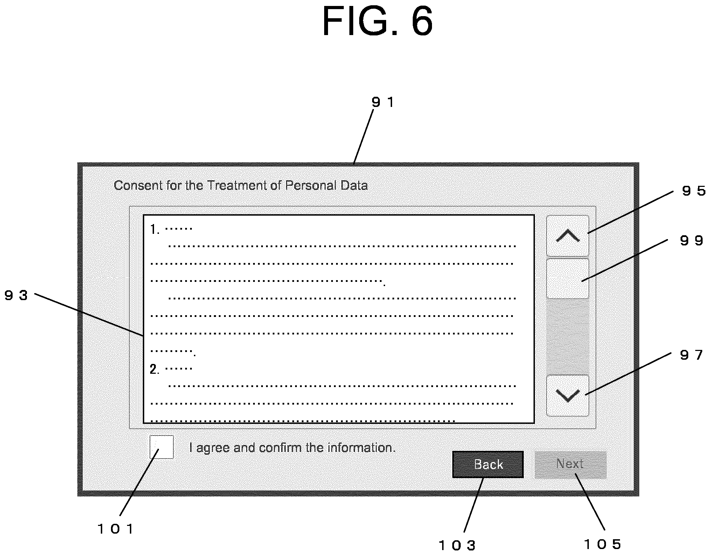

FIG. 6 is an example of the user consent screen for treatment of information, which is to be displayed on the display 41 by the image forming apparatus 40. A user consent screen 91 for treatment of information is displayed on the display 41 in step S11 of FIG. 4. The user consent screen 91 for the treatment of information includes: an explanatory text 93 explaining the treatment relating to personal information; arrows 95 and 97 and a knob 99 for scrolling the explanatory text 93; a check field 101 for the user to check when the user consents to the explanatory text 93; a back button 103; and a next button 105 for instructing a screen transition to a password setting screen (administrator) 111 to be displayed on the display 41 in the next step S13.

It is desirable that an input to the check field 101 is accepted only after the entire explanatory text 93 is displayed by the arrows 95 and 97 and the knob 99. It is desirable that an operation for the next button 105 can be accepted after the check field 101 is checked, and cannot be accepted in an unchecked state.

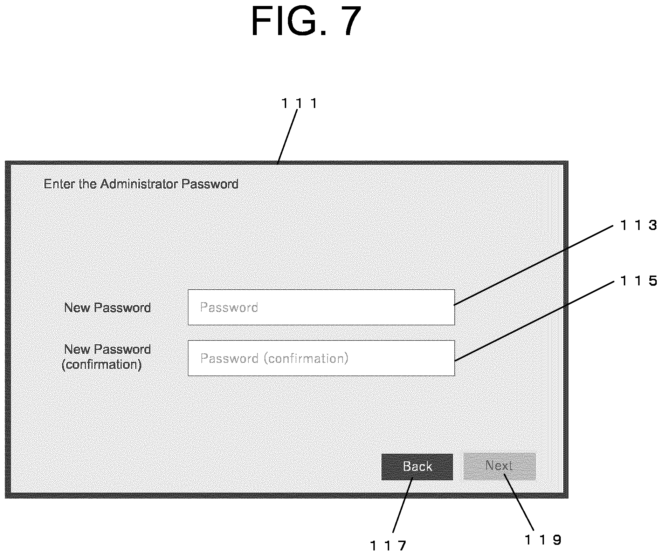

FIG. 7 is an example of the password setting screen (administrator) to be displayed on the display 41 by the image forming apparatus 40. A password setting screen (administrator) 111 is displayed on the display 41 in step S13 of FIG. 4 when a password of an administrator is not registered in the image forming apparatus 40. The password setting screen (administrator) 111 is a screen for setting a password of an administrator. The password setting screen (administrator) 111 includes input fields 113 and 115, a back button 117, and a next button 119.

When the back button 117 is operated, the controller 57 executes screen transition to the user consent screen 91 for the treatment of information, which is displayed on the display 41 in step S11. When the next button 119 is operated, the controller 57 executes screen transition to a security setting screen 251 to be displayed on display 41 in step S15. The input fields 113 and 115 are both areas for inputting a password of the administrator. In order to prevent the password from being erroneously set, the password setting screen (administrator) 111 requires the same password to be input to both the input fields 113 and 115. The controller 57 compares the two passwords being input in the input fields 113 and 115, and activates the next button 119 only when the passwords match.

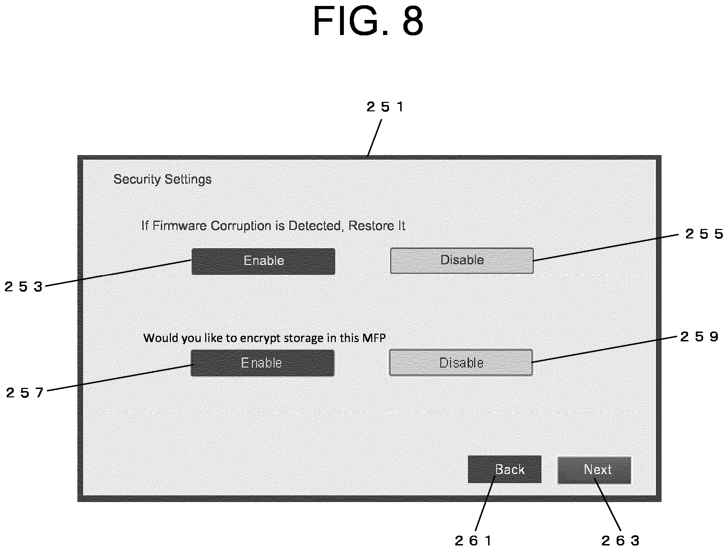

FIG. 8 is an example of the security setting screen to be displayed on the display 41 by the image forming apparatus 40. The security setting screen 251 is displayed on the display 41 in step S15 of FIG. 4. The security setting screen 251 includes firmware restore setting buttons 253 and 255, encryption setting buttons 257 and 259, a back button 261, and a next button 263.

The firmware restore setting buttons 253 and 255 are buttons for setting whether or not to attempt to restore firmware when corruption of the firmware is detected. When the firmware restore setting button 253 is operated, the controller 57 detects the corruption of the firmware and executes its restoration process. When the firmware restore setting button 255 is operated, the controller 57 does not automatically execute the restoration process even if the controller 57 detects the corruption of the firmware.

The encryption setting buttons 257 and 259 are buttons for setting whether or not to execute an encryption process on the second storage 55. When the next button 263 is operated in a state where the encryption setting button 257 is operated and the initial installation wizard has ended, the controller 57 selects "Yes" in step S3 of FIG. 3 and executes the encryption process. On the other hand, when the next button 263 is operated after the encryption setting button 259 is operated and the initial installation wizard has ended, the controller 57 selects "No" in step S3 of FIG. 3 and reboots the image forming apparatus 40.

### 1.3.4 Advantageous Effects

According to the first embodiment, the image forming apparatus 40 is shipped from a factory in a state where the use of the external interface 50 and the main function is restricted, but in the initial installation wizard, after inquiring of the user as to whether or not to perform the encryption process (step S15), the restrictions on use of the external interface 50 and the main function are released (step S9).

For this reason, according to the first embodiment, since the user is restricted on use of the external interface 50 and the main function before inquiring of the user as to whether or not to perform the encryption process, it is possible to prevent information from leaking from the image forming apparatus 40.

Further, according to the first embodiment, it is possible to release the restrictions on use of the external interface 50 and the main function after inquiring of the user as to whether or not to perform the encryption process.

In addition, according to the first embodiment, it is possible to suppress the risk of information leakage by executing the encryption process when the user desires.

### 1.3.5 Modification of First Embodiment

The above description has been made assuming that the image forming apparatus 40 is shipped from a factory while restricting the use of functions other than functions related to the external interface 50 and the initial setting, and the use restrictions are released by executing the operation of FIG. 3, but functions to be restricted at the time of factory shipment can be optionally determined. Further, although the use of the external interface 50, i.e., the communicator 49 and/or the connector 51 is restricted, the use of other functional blocks illustrated in FIG. 2 may be restricted.

In the "1.3 Initial Setting", the restrictions on use of the external interface 50 and the main function are released (step S9) regardless of whether or not the encryption process is executed. Alternatively, the use restrictions may be released when the encryption process is executed, and the use restrictions may not be released when the encryption process is not executed.

Further, a difference may be provided in the use restrictions to be released between the case where the encryption process is executed and the case where the encryption process is not executed. For example, when the encryption process is executed, the use restriction may be completely released, and when the encryption process is not executed, the use restrictions may be partially released.

### 2. Second Embodiment

A second embodiment will be described. The second embodiment responds to a case where power is disconnected while the initial installation wizard is executed. In the second embodiment, when the power disconnection occurs during a period from the start to the end of the initial installation wizard, all the contents designated by the user are discarded, and the initial installation wizard is restarted at the next activation. The second embodiment differs from the first embodiment in that it has an additional step between steps S1 and S3. Hereinafter, only differences in configuration and process from the first embodiment will be mainly described. The power disconnection refers to a state where electricity is not supplied to the image forming apparatus 40, and includes not only complete power disconnection but also temporary power disconnection and instantaneous power disconnection.

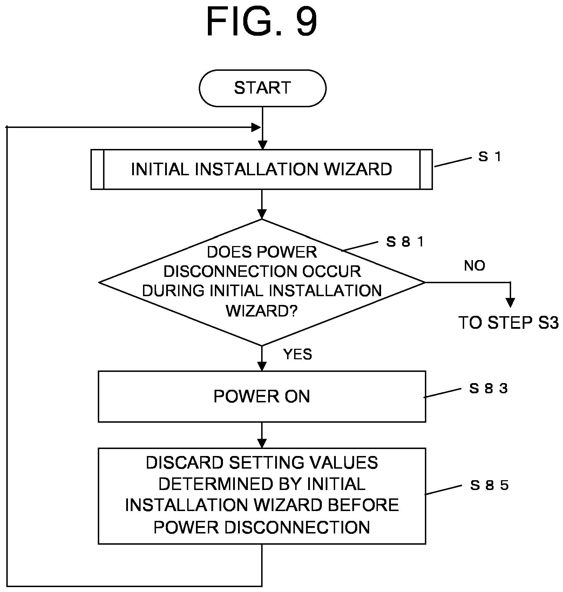

FIG. 9 is a flowchart for describing an operation of the image forming apparatus 40. In a case where the power disconnection occurs due to a power failure or the like during the execution of the initial installation wizard (YES in step S81), when the image forming apparatus 40 is turned on next time (step S83), the controller 57 discards the setting values determined by the initial installation wizard before the power disconnection (step S85), and restarts the initial installation wizard from the beginning (step S1). When the power disconnection does not occur during the execution of the initial installation wizard (NO in step S81), the process proceeds to step S3.

According to the second embodiment, even when the power disconnection occurs during the execution of the initial installation wizard, the initial installation work of the image forming apparatus 40 can be then restarted only by turning on the power of the image forming apparatus 40 after that.

Although the above-described operation is so-called rollback, the initial installation wizard may be continued by roll-forward. Namely, in the above-described operation, the setting values determined before the power disconnection are discarded in step S85, but these setting values may be held instead of being discarded, and undetermined setting values may be determined. At this time, the setting values that have been determined before the power disconnection may be displayed or may not be displayed.

### 3. Third Embodiment

A third embodiment will be described. The third embodiment responds to a power disconnection that occurs during execution of data saving. Namely, the third embodiment responds to the power disconnection that occurs during execution of data copy from the second storage 55 to the save storage 53B, which is performed in step S51 in the first embodiment. In the third embodiment, when the power disconnection occurs during execution of data saving, the setting values determined by the initial installation wizard are discarded. Thereafter, when the power of the image forming apparatus 40 is turned on again, the initial installation wizard is restarted. Herein, only differences in configuration and process from the first embodiment will be mainly described. In the third embodiment, an operation to be described below is executed instead of step S51.

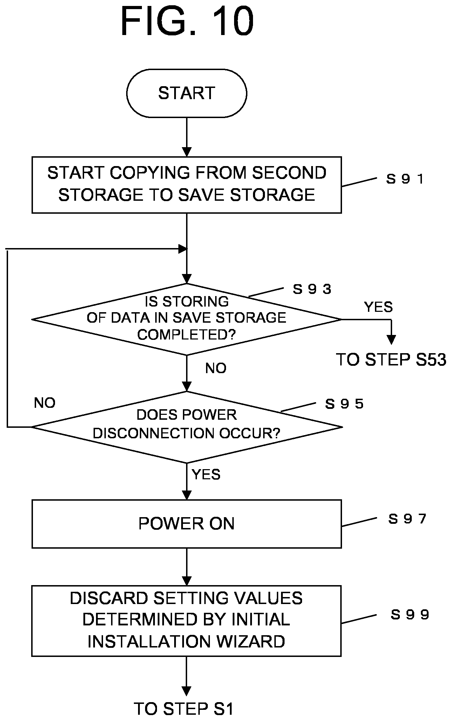

FIG. 10 is a flowchart for describing an operation of the image forming apparatus 40. The controller 57 starts copying from the second storage 55 to the save storage 53B (step S91). In a case where the power disconnection occurs (YES in step S95) before the copy is completed (NO in step S93), when the image forming apparatus 40 is turned on next time (step S97), the controller 57 discards the setting values determined by the initial installation wizard that has been executed immediately before (step S99), and the process returns to step S1. In a case where the copy, which has started in step S91, is completed without the occurrence of the power disconnection (YES in step S93), the process proceeds to Step S53.

According to the third embodiment, it is possible to restart the process from an appropriate step in response to the power disconnection that occurs when saving data from the second storage 55 to the save storage 53B.

### 4. Fourth Embodiment

A fourth embodiment will be described. The fourth embodiment responds to a power disconnection that occurs during restoration of data from the save storage 53B to the encrypted second storage 55. When the image forming apparatus 40 is activated after the power disconnection, the encryption process is automatically restarted. Herein, only differences in configuration and process from the first embodiment will be mainly described.

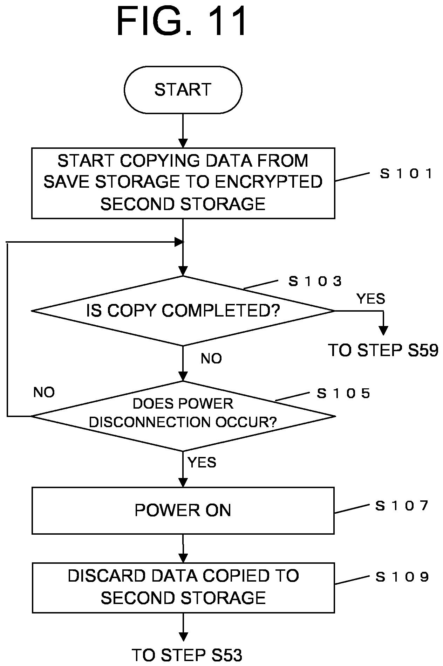

FIG. 11 is a flowchart for describing an operation of the image forming apparatus 40. The operation of this flowchart is executed instead of step S59 of FIG. 5. After the controller 57 starts copying data from the save storage 53B to the second storage 55 (step S101), in a case where the power disconnection occurs before the copy is completed (NO in step S103, YES in step S105), the controller 57 discards the data that is being copied to the second storage 55 (step S109) when the image forming apparatus 40 is turned on next time (step S107), and returns to step S53 and restarts the encryption process of the second storage 55 from the generation of the encryption key.

According to the fourth embodiment, it is possible to restart the process from an appropriate step in response to the power disconnection that occurs during the data copy from the save storage 53B to the encrypted second storage 55.

### 5. Fifth Embodiment

A fifth embodiment will be described. In the above-described embodiment, the restrictions on the use of the external interface 50 and the main function have not been released until the initial installation wizard ends. In the fifth embodiment, a special mode for a service person is prepared. In the special mode, restrictions on use of an external interface 50 and a main function are released.

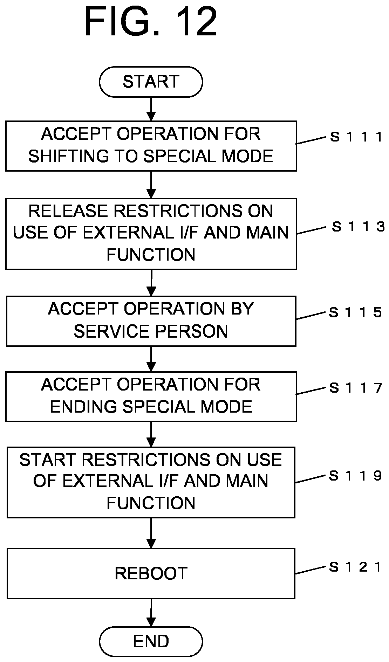

This will be described below with reference to FIG. 12. When an operation for shifting to the special mode is accepted by the operation acceptor 43 in a state where the operation of FIG. 3 is not executed (step S111), the special mode section 57D releases the restrictions on the use of the external interface 50 and the main function (step S113). The operation for shifting to the special mode includes, for example, performing a special operation that is not disclosed to a general user, a login using a user name and a password which have been set in advance for a service person, and the like.

In the special mode, all operational constraints of the image forming apparatus 40 are released. At this time, the special mode section 57D permits the user to use all the functions of the image forming apparatus 40 which include the external interface 50 and the main function (step S 115). The service person or the like performs maintenance work or the like of the image forming apparatus 40 by using the functions of the image forming apparatus 40 without restriction.

When a predetermined operation for ending the special mode is accepted via the operation acceptor 43 (step S117), the special mode section 57D resumes the restrictions on the use of the external interface 50 and the main function (step 5119), and reboots the image forming apparatus 40 (step S121).

According to the fifth embodiment, a service person or the like can perform maintenance work or the like even before the execution of the initial installation wizard.

In the special mode, instead of releasing restrictions on all the functions, restrictions on only some of the functions may be released.

The above description has been made assuming that the operation for shifting to the special mode has been performed when the operation of FIG. 3 is not executed, but the shift to the special mode may be permitted even during the execution of the initial installation wizard. However, it is preferable to prohibit the shift to the special mode during the execution of the encryption process.

In a case where the mode is shifted to the special mode during the execution of the initial installation wizard, a so-called rollback may be performed in which the determined setting value by the initial installation wizard is discarded, or a so-called roll forward may be performed in which the determined setting value is held and the setting value that has not been set is determined.

The necessity of the reboot in step S121 may be determined according to the operation content during the special mode.

In the special mode, when all or some of the setting items to be set in the initial installation wizard are determined, the process may proceed to step S3 by omitting the execution of the initial installation wizard in step S1 in FIG. 3.

### 6. Modification

The present disclosure is not limited to the embodiments as described above and modifications, but is diversely changeable. In other words, an embodiment to be acquired by combining technical measures modified as appropriate within a range that does not depart from the gist of the present disclosure are also included in the technical scope of the present disclosure.

In the above-described embodiment, the description has been made assuming that the necessity of an encryption process of the storage is determined and the encryption process is executed if necessary. However, the present disclosure is not limited thereto. At a time of shipment setting after factory assembly, the image forming apparatus may be caused to execute necessity determination of an encryption process and the encryption process, in accordance with a region of a shipment destination. In this case, for example, in an image forming apparatus to be shipped to Europe, as illustrated in FIG. 3, after the initial installation wizard, the necessity determination of an encryption process and the encryption process are executed. On the other hand, in an image forming apparatus to be shipped to a place other than Europe, it is considered that the necessity determination of an encryption process (step S4) and the encryption process (step S5) are omitted from FIG. 3.

In the above-described embodiment, the description has been made assuming that the process in FIG. 3 is performed by the user on the image forming apparatus that is shipped from the factory. For example, the process of FIG. 3 may be performed before factory shipment. In this case, dummy data are set as various setting values in an initial installation wizard to be executed before factory shipment, and an encryption process is then executed. When the image forming apparatus reaches the user, the controller executes a process of updating the various setting values, which have been set by the initial installation wizard, in accordance with an input from the user.

In the above-described embodiment, the description has been made assuming that the encryption process is executed following the initial installation wizard. However, in order to further enhance security, the encryption process may be periodically executed, whereby a new encryption key is generated, and then, the second storage may be encrypted by using the new encryption key.

In the above-described embodiment, basically, it is assumed that a user newly introduces an image forming apparatus, but the present disclosure is not limited thereto. For example, the process of FIG. 3 may be executed when the user parts with the image forming apparatus, such as a case where the user discards the image forming apparatus or a case where the user returns a leased image forming apparatus to the leasing company. In this case, in the initial installation wizard, appropriate values (a random value, a predetermined fixed value, etc.) are set as setting values of various settings, and then an encryption process is performed. Thus, even when a third party acquires the storage from the image forming apparatus that has been parted with, the data can be protected from the third party because the storage is encrypted.

The program, which operates in each apparatus of the embodiments, is a program for controlling the CPU or the like (a program causing a computer to function) in such a way as to achieve the functions of the embodiments as described above. The information to be handled by these devices is temporarily accumulated in a temporary storage device (e.g., RAM) during processing the information, and then stored in various storage devices such as read only memory (ROM) and an HDD, and is read, corrected, and written by the CPU as needed.

A recording medium for storing a program may be any of a semiconductor medium (e.g., a ROM, a non-volatile memory card, etc.), an optical recording medium or a magneto-optical recording medium (e.g., a digital versatile disc (DVD), a magneto-optical disc (MO), a mini disc (MD), a compact disc (CD), a Blue-ray (registered trademark) disc (BD), etc.), a magnetic recording medium (e.g., a magnetic tape, a flexible disc, etc.), and the like. Further, the functions of the embodiments as described above are achieved not only by executing the loaded program, but the functions of the present disclosure may be also achieved by processing in collaboration with an operating system, other application programs, or the like, based on the instruction of the program.

In addition, in a case where the program is distributed in the market, the program can be stored in a portable recording medium and distributed, or can be transferred to a server computer connected via a network such as the Internet. In this case, needless to say, a storage device of the server computer is also included in the present disclosure.

## Claims

1. An image forming apparatus (40) comprising: one or more controllers (57), one or more first memories (53), one or more second memories (55), a display (41), an operation acceptor (43), and an external interface (50), wherein
the one or more controllers (57)
display, on the display (41), an inquiry screen for inquiring whether or not to encrypt the one or more second memories (55) when an initial setting process is executed in a first state where use of the external interface (50) is restricted,
encrypt the one or more second memories (55), based on acceptance of an operation to encrypt the one or more second memories (55) by the operation acceptor (43), and
set a second state where a restriction on the use of the external interface (50) is released, after the one or more second memories (55) are encrypted.

2. The image forming apparatus according to claim 1, wherein
the one or more controllers (57)
store a setting value being input at a time of execution of the initial setting process in the one or more second memories (55), and
encrypt the one or more second memories (55) after copying the setting value stored in the one or more second memories (55) to the one or more first memories (53) when the operation acceptor (43) accepts an operation to encrypt the one or more second memories (55).

3. The image forming apparatus according to claim 2, wherein
the one or more controllers (57) copy the setting value from the one or more first memories (53) to the one or more second memories (55) after encrypting the one or more second memories (55).

4. The image forming apparatus according to claim 3, wherein
the one or more controllers (57) delete the setting value from the one or more first memories (53) after copying the setting value from the one or more first memories (53) to the one or more second memories (55).

5. The image forming apparatus according to claim 1, wherein
the image forming apparatus (40) has at least one of a copy function, a scanner function, a facsimile function, and a printer function, and
the one or more controllers (57) can execute the encryption without performing a setting related to a function of the image forming apparatus (40).

6. The image forming apparatus according to claim 2, wherein
the one or more controllers (57) execute the initial setting process again when a power disconnection occurs.

7. The image forming apparatus according to claim 3, wherein
the one or more controllers (57) execute the encryption again when a power disconnection occurs in a state where the setting value is copied from the one or more first memories (53) to the one or more second memories (55).

8. The image forming apparatus according to claim 1, wherein
the image forming apparatus (40) has a special mode that is an operation mode for a service person of the image forming apparatus (40),
the one or more controllers (57) set the second state when the special mode is started, and
the one or more controllers (57) set the first state when the special mode is ended.

9. A method of operating an image forming apparatus (40) including an external interface (50), one or more first memories (53), and one or more second memories (55), the method comprising:
displaying an inquiry screen for inquiring whether or not to encrypt the one or more second memories (55) when an initial setting process is executed in a first state where use of the external interface (50) is restricted;
encrypting the one or more second memories (55), based on acceptance of an operation to encrypt the one or more second memories (55); and
setting a second state where a restriction on the use of the external interface (50) is released, after the one or more second memories (55) are encrypted.
